# FASCICULE DE BREVET EUROPEEN

(11) **EP 4 657 713 B1**
(45) Date de publication et mention de la délivrance du brevet: **04.11.2026**
(21) Numéro de dépôt: 25178914.5
(22) Date de dépôt: 27.05.2025
(51) Int. Cl.: H02J 7/35

(54) **ACTIONNEUR ELECTROMECANIQUE POUR UN DISPOSITIF D'OCCULTATION**
ELEKTROMECHANISCHER AKTUATOR FÜR EINE VERDUNKELUNGSVORRICHTUNG
ELECTROMECHANICAL ACTUATOR FOR A DARKENING DEVICE

(30) Priorité: 31.05.2024 FR 2405712
(43) Date de publication de la demande: 03.12.2025
(73) Titulaire: Somfy Activites SA, 74300 Cluses (FR)
(72) Inventeur: WERLE, Quentin, 74300 CLUSES (FR); FERNANDEZ, Cédric, 74300 CLUSES (FR)
(74) Mandataire: Bugnion Genève

(56) Documents cités:
- WO-A2-2015/092441
- CN-A- 105 075 061
- JP-A- 2002 142 383
- JP-A- 2015 164 377

## Description

### DOMAINE TECHNIQUE DE L'INVENTION

La présente invention concerne un actionneur électromécanique pour un dispositif d'occultation.

### ETAT DE LA TECHNIQUE

Un actionneur électromécanique pour un dispositif d'occultation installé au niveau d'une ouverture d'un bâtiment, comprend une unité électronique de contrôle, et une batterie rechargeable. La batterie rechargeable alimente l'unité électronique de contrôle, ainsi que le moteur électrique de l'actionneur électromécanique en fonctionnement de l'actionneur électromécanique.

Il est connu, dans un premier mode de charge de la batterie rechargeable, de charger la batterie rechargeable avec l'énergie électrique produite par un panneau solaire photovoltaïque externe à l'actionneur électromécanique, le panneau solaire photovoltaïque étant connecté à l'actionneur électromécanique par l'intermédiaire d'un connecteur, et disposé au niveau de l'ouverture du bâtiment de telle sorte que le panneau solaire photovoltaïque produise de l'énergie électrique lorsqu'il est exposé à un rayonnement solaire. Il est également connu, dans un deuxième mode de charge de la batterie rechargeable, de charger la batterie rechargeable avec l'énergie électrique d'un chargeur externe à l'actionneur électromécanique, le chargeur étant connecté à l'actionneur électromécanique par l'intermédiaire d'un connecteur d'alimentation. L'unité électronique de contrôle comprend dans ce cas un circuit de charge de la batterie rechargeable relié électriquement au connecteur d'alimentation par l'intermédiaire d'un bus d'alimentation, le circuit de charge étant, en outre, connecté à la batterie rechargeable pour charger la batterie rechargeable à partir de l'énergie présente sur le bus d'alimentation.

Lorsqu'un actionneur électromécanique intègre ces deux modes de charge de la batterie rechargeable, et que, dans le premier mode de charge, la batterie rechargeable est chargée avec l'énergie électrique produite par le panneau solaire photovoltaïque par l'intermédiaire du circuit de charge, un inconvénient est que le rendement du circuit de charge est dégradé par rapport au deuxième mode de charge de la batterie rechargeable, augmentant ainsi la consommation globale de l'actionneur électromécanique lorsque celui-ci est connecté au panneau solaire photovoltaïque. Des exemples de batteries chargées par des panneaux photovoltaïques et un chargeur externe peut être trouvé dans le document CN105075061.

Il existe donc un besoin pour minimiser la consommation globale d'un actionneur électromécanique dans un premier mode de charge lorsque celui-ci est connecté à un panneau solaire photovoltaïque pour charger la batterie rechargeable de l'actionneur électromécanique, en conservant la possibilité de charger la batterie rechargeable avec l'énergie électrique d'un chargeur par l'intermédiaire d'un circuit de charge.

### RESUME DE L'INVENTION

La présente invention a alors pour objet un actionneur électromécanique pour un dispositif d'occultation, l'actionneur électromécanique comprenant au moins :
- un moteur électrique,
- une unité électronique de contrôle,
- des moyens de connexion à au moins une batterie rechargeable, et
- un connecteur, le connecteur étant destiné à être connecté à un panneau solaire photovoltaïque ou à un chargeur,

l'unité électronique de contrôle comprenant au moins :
   - un circuit de charge, le circuit de charge étant, d'une part, connecté aux moyens de connexion à l'au moins une batterie rechargeable, et, d'autre part, relié électriquement au connecteur par l'intermédiaire d'un bus d'alimentation ,
   - un contrôleur, et
   - des moyens de détection d'une connexion du panneau solaire photovoltaïque au connecteur,
l'unité électronique de contrôle comprenant, en outre, au moins :
   - un premier interrupteur, le premier interrupteur étant connecté, d'une part, au connecteur par l'intermédiaire du bus d'alimentation, et, d'autre part, aux moyens de connexion à l'au moins une batterie rechargeable,
      et
le contrôleur étant configuré pour commander le premier interrupteur dans un état fermé par une première sortie commandable du contrôleur lorsqu'une connexion d'un panneau solaire photovoltaïque au connecteur est détectée, de sorte à relier électriquement le bus d'alimentation aux moyens de connexion à l'au moins une batterie rechargeable.

Dans un exemple avantageux, le premier interrupteur est connecté en parallèle du circuit de charge de telle sorte à ce que le premier interrupteur court-circuite le circuit de charge lorsque le premier interrupteur est commandé par la première sortie commandable du contrôleur.

La consommation de l'actionneur électromécanique est améliorée puisqu'elle ne met plus ou au moins que très partiellement en œuvre le circuit de charge dont le rendement serait mauvais s'il devait transformer le courant issu du panneau solaire photovoltaïque.

Selon une caractéristique additionnelle, la première sortie relie électriquement le bus d'alimentation aux moyens de connexion à l'au moins une batterie rechargeable par l'intermédiaire d'une diode de telle sorte qu'un courant issu de la batterie rechargeable soit bloqué vers le bus d'alimentation.

Grâce à la mise en œuvre d'une diode, un courant issu de la batterie rechargeable est bloqué vers le bus d'alimentation et les risques d'endommagement sont réduits.

Avantageusement, le connecteur est un connecteur USB Type-C, le contrôleur est un contrôleur USB Type-C, et le contrôleur USB Type-C est connecté à au moins une broche de communication du connecteur bus série universel Type-C par l'intermédiaire d'un bus de communication.

Dans un mode de réalisation particulièrement avantageux, l'unité électronique de contrôle comprend, en outre, au moins :
- un circuit de protection, le circuit de protection étant connecté au connecteur par l'intermédiaire d'un bus de communication, et comprenant une entrée de tension, l'entrée de tension étant reliée au bus d'alimentation par l'intermédiaire d'un pont de résistances, et
- un deuxième interrupteur, le deuxième interrupteur étant connecté, d'une part, au bus d'alimentation, et, d'autre part, au circuit de charge, le deuxième interrupteur étant commandé dans un état ouvert par le circuit de protection lorsque le circuit de protection détecte une surtension sur l'entrée de tension,

le contrôleur comprenant, en outre, une deuxième sortie commandable reliée électriquement à l'entrée de tension ,et
le contrôleur étant configuré pour commander la deuxième sortie commandable lorsque la connexion du panneau solaire photovoltaïque au connecteur est détectée, de sorte à simuler une surtension sur l'entrée de tension.

La mise en œuvre d'un circuit de protection en coopérant avec un deuxième interrupteur permet de détecter une surtension sur le bus d'alimentation, et, en réaction, d'interrompre la circulation d'un courant sur le bus d'alimentation entre le connecteur et le circuit de charge pour protéger le circuit de charge de cette surtension. L'invention utilise avantageusement le circuit de protection pour isoler le circuit de charge en ouvrant le deuxième interrupteur. Selon une caractéristique additionnelle, la deuxième sortie commandable est reliée à l'entrée de tension par l'intermédiaire d'une résistance et d'une diode Zener connectées ensemble en série.

Le connecteur est avantageusement un connecteur USB Type-C, le contrôleur est un contrôleur USB Type-C, et le circuit de protection est un circuit de protection de port USB Type-C.

La mise en œuvre d'un connecteur USB type-C permet à la fois de recharger la batterie et un échange de données entre le dispositif de recharge et l'actionneur.

La présente invention a également pour objet un dispositif d'occultation comprenant au moins un tube d'enroulement, un écran enroulable sur le tube d'enroulement, un actionneur électromécanique configuré selon l'invention, l'actionneur électromécanique étant, en outre, configuré pour entraîner en rotation le tube d'enroulement, l'actionneur électromécanique comprenant, en outre, un support de couple, le support de couple comprenant le connecteur. Le connecteur placé sur le support de couple est facilement accessible.

La présente invention a également pour objet un procédé de charge d'au moins une batterie rechargeable configurée pour alimenter un actionneur électromécanique pour un dispositif d'occultation, l'actionneur électromécanique étant configuré l'invention, le procédé étant mis en œuvre par l'unité électronique de contrôle, et comprenant au moins :
- une étape de détection d'une connexion du panneau solaire photovoltaïque au connecteur,
- lorsqu'une la connexion du panneau solaire photovoltaïque au connecteur est détectée, une étape de commande du premier interrupteur dans un état fermé, de sorte à relier électriquement le bus d'alimentation aux moyens de connexion à l'au moins une batterie rechargeable.

La présente invention a également pour objet un procédé de charge d'au moins une batterie rechargeable configurée pour alimenter un actionneur électromécanique pour un dispositif d'occultation, l'actionneur électromécanique étant configuré selon l'invention, le procédé étant mis en œuvre par l'unité électronique de contrôle, et comprenant au moins :
- une étape de détection d'une connexion du panneau solaire photovoltaïque au connecteur,
- lorsqu'une la connexion du panneau solaire photovoltaïque au connecteur est détectée, une première étape de commande du premier interrupteur dans un état fermé, de sorte à relier électriquement le bus d'alimentation aux moyens de connexion à l'au moins une batterie rechargeable, et
- lorsqu'une la connexion du panneau solaire photovoltaïque au connecteur est détectée, une étape de commande de la deuxième sortie commandable de sorte à simuler une surtension sur l'entrée de tension provoquant le passage à l'état ouvert du deuxième interrupteur.

La présente invention a également pour objet un module d'alimentation d'un batterie rechargeable comportant :
une unité électronique de contrôle,
des moyens de connexion à une batterie rechargeable, et
un connecteur destiné à être connecté à un panneau solaire photovoltaïque ou à un chargeur,
l'unité électronique de contrôle comprenant au moins :
   un circuit de charge, le circuit de charge étant, d'une part, connecté aux moyens de connexion à la batterie rechargeable et, d'autre part, relié électriquement au connecteur par l'intermédiaire d'un bus d'alimentation, et
   un contrôleur,
   des moyens de détection d'une connexion du panneau solaire photovoltaïque au connecteur, l'unité électronique de contrôle comprenant en outre, au moins :
      un premier interrupteur, le premier interrupteur étant connecté, d'une part, au connecteur par l'intermédiaire du bus d'alimentation, et, d'autre part, aux moyens de connexion à la batterie rechargeable,
      et le contrôleur étant configuré pour commander
      le premier interrupteur dans un état fermé par une première sortie commandable du contrôleur lorsqu'une connexion d'un panneau solaire photovoltaïque au connecteur est détectée, de sorte à relier électriquement le bus d'alimentation aux moyens de connexion à la batterie rechargeable.

Dans un exemple avantageux, l'unité électronique de contrôle du module d'alimentation comprend, en outre, au moins :
un circuit de protection, le circuit de protection étant connecté au connecteur par l'intermédiaire d'un bus de communication, et comprenant une entrée de tension, l'entrée de tension étant reliée au bus d'alimentation par l'intermédiaire d'un pont de résistances, et
un deuxième interrupteur, le deuxième interrupteur étant connecté, d'une part, au bus d'alimentation, et, d'autre part, au circuit de charge, le deuxième interrupteur est commandé dans un état ouvert par le circuit de protection lorsque le circuit de protection détecte une surtension sur l'entrée de tension,
et le contrôleur comprenant, en outre, une deuxième sortie commandable reliée électriquement à l'entrée de tension,
et le contrôleur étant configuré pour commander la deuxième sortie commandable lorsque la connexion du panneau solaire photovoltaïque au connecteur d'alimentation est détectée, de sorte à simuler une surtension sur l'entrée de tension.

Le module d'alimentation peut équiper tout dispositif alimenté par au moins une batterie rechargeable apte à être rechargée soit par un panneau solaire photovoltaïque soit par un chargeur.

### BREVE DESCRIPTION DES FIGURES

la présente invention sera mieux comprise à l'aide de la description qui va suivre et des dessins en annexe sur lesquels :
- La figure 1 est une vue de côté d'un exemple de réalisation d'un dispositif d'occultation auquel s'applique l'invention,
- La figure 2 est une vue de face d'un exemple d'actionneur électromécanique selon l'invention,
- La figure 3 est une vue en perspective d'un détail de l'actionneur électromécanique au niveau du support de couple,
- La figure 4 est une représentation schématique d'une unité électronique de contrôle selon un premier mode de réalisation de l'invention,
- La figure 5 est une représentation schématique d'une unité électronique de contrôle selon un deuxième mode de réalisation de l'invention.

### DESCRIPTION DETAILLEE

Dans la présente demande, on entend par « connecter » le fait de relier électriquement directement deux éléments électriques et/ou électroniques, et par « relier électriquement » le fait d'établir une connexion électrique entre deux éléments électriques et/ou électroniques, d'autres éléments fonctionnels étant interposés entre les deux éléments électriques et/ou électroniques. Des éléments fonctionnels sont des éléments électriques et/ou électroniques autres que des conducteurs électriques type fil ou piste conductrice.

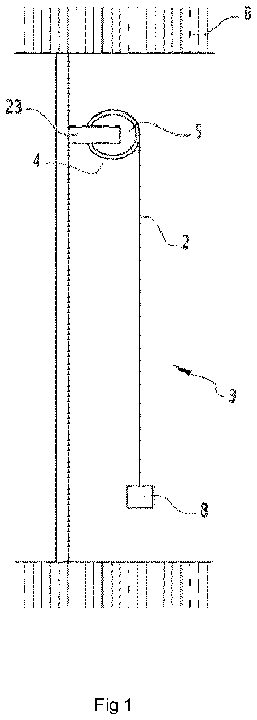

On décrit tout d'abord, en référence à la figure 1, un exemple de dispositif d'occultation ou de protection solaire 3. Le dispositif d'occultation, ou de protection solaire est par la suite appelé « dispositif d'occultation ».

Le dispositif d'occultation 3 peut être un store, notamment un store comprenant une toile enroulable, ou une toile plissée ou alvéolée, ou un store avec des lames orientables. La présente invention s'applique à tous les types de dispositif d'occultation.

Le dispositif d'occultation 3 comprend un dispositif d'entraînement motorisé 5 d'un écran 2, le dispositif d'entraînement motorisé 5 étant positionné au niveau d'une ouverture d'un bâtiment B pour déplacer l'écran 2 par rapport à l'ouverture du bâtiment B. Le dispositif d'occultation 3 comprend l'écran 2.

L'écran 2 est par exemple formé d'une toile enroulable, ou d'une toile plissée ou alvéolée, ou encore formé à partir de lames orientables.

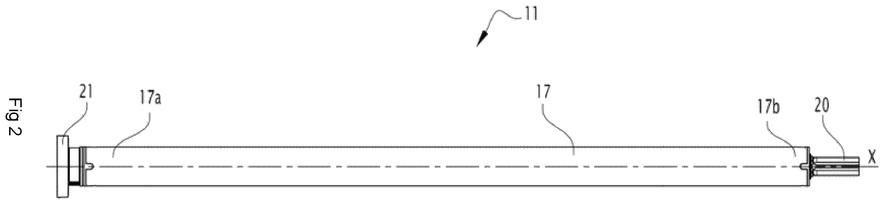

Le dispositif d'entraînement motorisé 5 comprend, en outre, un actionneur électromécanique 11, illustré à la figure 2.

Le dispositif d'occultation 3 comprend, en outre, un tube d'enroulement 4. L'écran 2 est enroulable sur le tube d'enroulement 4. En outre, le tube d'enroulement 4 est agencé de sorte à être entraîné en rotation par l'actionneur électromécanique 11.

Ainsi, l'écran 2 du dispositif d'occultation 3 est enroulé sur le tube d'enroulement 4 ou déroulé autour de celui-ci, le tube d'enroulement 4 étant entraîné par le dispositif d'entraînement motorisé 5, en particulier par l'actionneur électromécanique 11.

De cette manière, l'écran 2 est mobile entre une position enroulée, en particulier haute, et une position déroulée, en particulier basse, et inversement.

L'écran 2 du dispositif d'occultation 3 est un écran d'occultation et/ou de protection solaire, s'enroulant et se déroulant autour du tube d'enroulement 4, dont le diamètre intérieur est supérieur au diamètre externe de l'actionneur électromécanique 11, de sorte que l'actionneur électromécanique 11 peut être inséré dans le tube d'enroulement 4, lors de l'assemblage du dispositif d'occultation 3.

Le dispositif d'occultation 3 comprend, en outre, une barre de charge 8 pour exercer une tension sur l'écran 2. Une première extrémité de l'écran 2, en particulier l'extrémité supérieure de l'écran 2, dans une configuration assemblée du dispositif d'occultation 3, est fixée au tube d'enroulement 4. En outre, une deuxième extrémité de l'écran 2, en particulier l'extrémité inférieure de l'écran 2, dans la configuration assemblée du dispositif d'occultation 3, est fixée à la barre de charge 8.

L'actionneur électromécanique 11, en particulier de type tubulaire, permet de mettre en rotation le tube d'enroulement 4 autour d'un axe de rotation X, de sorte à déplacer, en particulier dérouler ou enrouler, l'écran 2 du dispositif d'occultation 3.

Dans un état monté du dispositif d'occultation 3, l'actionneur électromécanique 11 est inséré dans le tube d'enroulement 4.

Le dispositif d'occultation 3 comprend un dispositif de maintien 23. Le dispositif de maintien 23 peut comprendre deux supports. Les supports sont disposés chacun à une extrémité du tube d'enroulement 4, en particulier dans la configuration assemblée du dispositif d'occultation 3. Ainsi, le tube d'enroulement 4 est maintenu par l'intermédiaire des supports. Les supports permettent de lier mécaniquement le dispositif d'occultation 3 à la structure du bâtiment B, notamment à un mur du bâtiment B.

On décrit à présent, en référence aux figures 2 à 4, l'actionneur électromécanique 11 selon un exemple de réalisation non limitatif.

L'actionneur électromécanique 11 comprend une unité électronique de contrôle 15, un moteur électrique 16, et des moyens de connexion 19 à au moins une batterie rechargeable 18. L'unité électronique de contrôle 15 est connectée, d'une part, à la batterie rechargeable 18 par l'intermédiaire des moyens de connexion 19, et, d'autre part, au moteur électrique 16. L'actionneur électromécanique 11 comprend, en outre, un carter 17, en particulier tubulaire et creux. Le moteur électrique 16 est monté à l'intérieur du carter 17, en particulier dans une configuration assemblée de l'actionneur électromécanique 11.

Avantageusement, l'au moins une batterie rechargeable 18 est montée à l'intérieur du carter 17, en particulier dans la configuration assemblée de l'actionneur électromécanique 11, l'actionneur électromécanique 11 comprenant ici l'au moins une batterie rechargeable 18. En variante, l'au moins une batterie rechargeable 18 est externe à l'actionneur électromécanique 11, les moyens de connexion 19 s'étendant dans ce cas au travers du support de couple 21, les moyens de connexions 19 comprenant par exemple un connecteur d'alimentation dédié disposé au niveau du support de couple 21 et un câble d'alimentation reliant l'au moins une batterie rechargeable 18 à l'unité électronique de contrôle 15 par l'intermédiaire du connecteur d'alimentation dédié.

Le carter 17 comprend une première extrémité 17a et une deuxième extrémité 17b. La deuxième extrémité 17b est opposée à la première extrémité 17a. Ici, le carter 17 de l'actionneur électromécanique 11 est de forme cylindrique, notamment de révolution autour de l'axe de rotation X, et est ouvert à chacune de ses extrémités 17a, 17b.

L'actionneur électromécanique 11 comprend, en outre, un arbre de sortie 20. L'arbre de sortie 20 est disposé, autrement dit est configuré pour être disposé, du côté de la deuxième extrémité 17b du carter 17, en particulier dans la configuration assemblée de l'actionneur électromécanique 11.

L'actionneur électromécanique 11 comprend, en outre, un réducteur. Le réducteur est accouplé, autrement dit est configuré pour être accouplé, avec le moteur électrique 16 dans la configuration assemblée de l'actionneur électromécanique 11.

L'actionneur électromécanique 11 comprend, en outre, un frein. Le frein est configuré pour freiner et/ou pour bloquer en rotation l'arbre de sortie 20, de sorte à réguler la vitesse de rotation du tube d'enroulement 4, lors d'un déplacement de l'écran 2, et à maintenir bloqué le tube d'enroulement 4, lorsque le moteur électrique 16 est désactivé électriquement.

Le réducteur et, éventuellement, le frein sont montés à l'intérieur du carter 17 de l'actionneur électromécanique 11, en particulier dans la configuration assemblée de l'actionneur électromécanique 11.

L'actionneur électromécanique 11 comprend, en outre, une couronne, autrement dit un manchon. La couronne est configurée pour être disposée, autrement dit est disposée, au niveau de la première extrémité 17a du carter 17, en particulier dans la configuration assemblée de l'actionneur électromécanique 11.

La couronne forme, autrement dit est configurée pour former ou constituer, un palier de guidage en rotation du tube d'enroulement 4, autour du carter 17 de l'actionneur électromécanique 11, en particulier dans une configuration assemblée du dispositif d'entraînement motorisé 5, et, par conséquent, du dispositif d'occultation 3.

Le tube d'enroulement 4 est entraîné en rotation autour de l'axe de rotation X et du carter 17 de l'actionneur électromécanique 11 en étant soutenu par l'intermédiaire de deux liaisons pivot. La première liaison pivot est réalisée au niveau d'une première extrémité du tube d'enroulement 4 au moyen de la couronne disposée autour de la première extrémité 17a du carter 17 de l'actionneur électromécanique 11. La couronne permet ainsi de réaliser un palier. La deuxième liaison pivot est réalisée au niveau d'une deuxième extrémité du tube d'enroulement 4 opposée à la première extrémité.

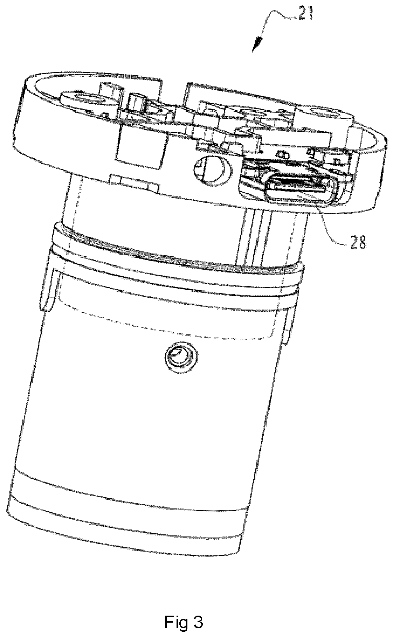

L'actionneur électromécanique 11 comprend, en outre, un support de couple 21, pouvant également être appelé « tête d'actionneur » ou « point fixe ». Un mode de réalisation du support de couple 21 est illustré à la figure 3.

Ici, le support de couple 21 est disposé au niveau de la première extrémité 17a du carter 17 de l'actionneur électromécanique 11, en particulier dans la configuration assemblée de l'actionneur électromécanique 11.

Le support de couple 21 de l'actionneur électromécanique 11 est configuré pour fixer l'actionneur électromécanique 11 sur le dispositif de maintien 23, en particulier sur l'un des supports.

Ainsi, le support de couple 21 permet de reprendre les efforts exercés par l'actionneur électromécanique 11, en particulier le couple exercé par l'actionneur électromécanique 11, par rapport à la structure du bâtiment B. Le support de couple 21 permet avantageusement de reprendre, en outre, des efforts exercés par le tube d'enroulement 4, notamment le poids du tube d'enroulement 4, de l'actionneur électromécanique 11 et de l'écran 2, et d'assurer la reprise de ces efforts par la structure du bâtiment B.

Le support de couple 21 est en saillie au niveau de la première extrémité 17a du carter 17 de l'actionneur électromécanique 11.

Ainsi, une première partie du support de couple 21 est disposée à l'intérieur du carter 17 et une deuxième partie du support de couple 21 est disposée à l'extérieur du carter 17.

Le support de couple 21 obture, autrement dit est configuré pour obturer, la première extrémité 17a du carter 17, en particulier dans la configuration assemblée de l'actionneur électromécanique 11.

Par ailleurs, le support de couple 21 de l'actionneur électromécanique 11 peut permettre de supporter au moins une partie de l'unité électronique de contrôle 15.

Le support de couple 21 est configuré pour être fixé, autrement dit est fixé, au carter 17 au moyen d'un ou plusieurs éléments de fixation, non représentés, en particulier dans la configuration assemblée de l'actionneur électromécanique 11. Le ou les éléments de fixation peuvent être, notamment, des bossages, des vis de fixation, des éléments de fixation par encliquetage élastique, des nervures emmanchées dans des échancrures ou une combinaison de ces différents éléments de fixation.

Dans un premier mode de réalisation, non représenté, la couronne est disposée, autrement dit est configurée pour être disposée, autour d'une partie du carter 17, en particulier dans la configuration assemblée de l'actionneur électromécanique 11. Dans ce cas, la couronne est montée libre en rotation autour du carter 17.

En variante, non représentée, la couronne est disposée, autrement dit est configurée pour être disposée, autour du support de couple 21, en particulier dans la configuration assemblée de l'actionneur électromécanique 11. Dans ce cas, la couronne est montée libre en rotation autour du support de couple 21.

Dans une autre variante, non représentée, la couronne est disposée, autrement dit est configurée pour être disposée, d'une part, autour du support de couple 21 et, d'autre part, autour d'une partie du carter 17, en particulier dans la configuration assemblée de l'actionneur électromécanique 11. Dans un tel cas, la couronne peut être montée libre en rotation, d'une part, autour du support de couple 21 et, d'autre part, autour du carter 17.

L'arbre de sortie 20 de l'actionneur électromécanique 11 est disposé à l'intérieur du tube d'enroulement 4 et au moins en partie à l'extérieur du carter 17 de l'actionneur électromécanique 11.

Ici, une extrémité de l'arbre de sortie 20 est en saillie par rapport au carter 17 de l'actionneur électromécanique 11, en particulier par rapport à la deuxième extrémité 17b du carter 17.

Avantageusement, l'arbre de sortie 20 de l'actionneur électromécanique 11 est configuré pour entraîner en rotation, autrement dit entraîne en rotation, un élément de liaison, également appelé « roue ». Cet élément de liaison est relié au tube d'enroulement 4, en particulier dans la configuration assemblée du dispositif d'occultation 3.

Lors de la mise en fonctionnement de l'actionneur électromécanique 11, le moteur électrique 16 et le réducteur entraînent en rotation l'arbre de sortie 20. En outre, l'arbre de sortie 20 de l'actionneur électromécanique 11 entraîne en rotation le tube d'enroulement 4 par l'intermédiaire de l'élément de liaison. Ainsi, le tube d'enroulement 4 entraîne en rotation l'écran 2 du dispositif d'occultation 3, de sorte à couvrir ou découvrir l'ouverture du bâtiment B.

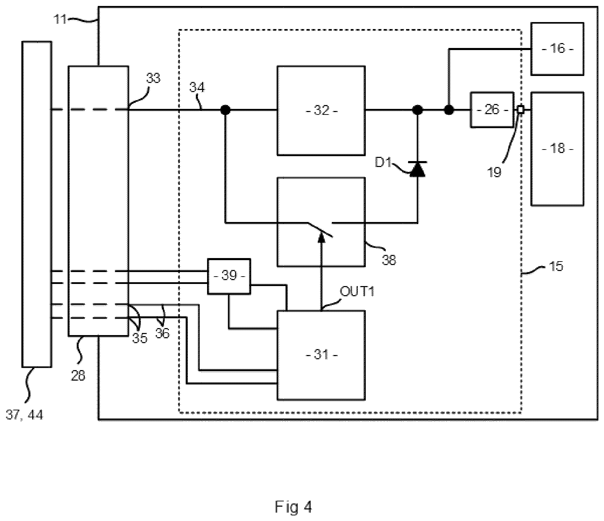

On décrit à présent, en référence à la figure 4, l'unité électronique de contrôle 15 de l'actionneur électromécanique 11.

L'unité électronique de contrôle 15 est disposée, autrement dit est intégrée, à l'intérieur du carter 17 de l'actionneur électromécanique 11.

L'unité électronique de contrôle 15 comprend un contrôleur 31 embarqué dans l'actionneur électromécanique 11, et un circuit de charge 32 de la batterie rechargeable 18.

Le circuit de charge 32 est connecté à la batterie rechargeable 18. Le circuit de charge 32 est spécifiquement configuré pour charger la batterie rechargeable 18 avec l'énergie électrique d'un chargeur 44 relié électriquement au circuit de charge 32 par l'intermédiaire du bus d'alimentation 34.

Avantageusement, le circuit de charge 32 est un circuit de charge de type Buck Boost (traduit du terme anglosaxon « Buck Boost Charger »).

L'unité électronique de contrôle 15 comprend au moins une carte électronique sur laquelle sont assemblés le circuit de charge 32 et le contrôleur 31, la carte électronique étant disposée, autrement dit intégrée, à l'intérieur du carter 17 de l'actionneur électromécanique 11 dans la configuration assemblée de l'actionneur électromécanique 11.

La batterie rechargeable 18 est configurée pour alimenter, autrement dit alimente, en énergie électrique l'actionneur électromécanique 11, en particulier l'unité électronique de contrôle 15 et le moteur électrique 16.

Avantageusement, la batterie rechargeable 18 est de type Ni-MH, ou de type Lithium-ion.

Le contrôleur 31 est par exemple un microcontrôleur. Ici, et à titre d'exemple nullement limitatif, le contrôleur 31 est un microcontrôleur STM32G0B1CE.

Avantageusement, l'unité électronique de contrôle 15 comprend, en outre, un module de gestion 26 de la batterie rechargeable 18, connecté entre la batterie rechargeable 18 et le circuit de charge 32. En cas de défaut électrique, ou de dysfonctionnement de la batterie rechargeable 18, par exemple, en cas de température trop élevée de la batterie rechargeable 18, le module de gestion 26 de la batterie rechargeable 18 interrompt, autrement dit est configuré pour interrompre, la connexion entre le circuit de charge 32 et la batterie rechargeable 18, pour éviter d'endommager la batterie rechargeable 18.

L'actionneur électromécanique 11 comprend un connecteur 28. Le connecteur 28 comprend au moins une broche d'alimentation 33, connectée au circuit de charge 32 par un bus d'alimentation 34. Dans un exemple de réalisation avantageux et comme cela est représenté sur la figure 3, le connecteur 28 est disposé au niveau du support de couple 21, ce qui le rend facilement accessible à un utilisateur pour connecter soit un panneau solaire photovoltaïque 37, soit un chargeur 44.

Avantageusement, le connecteur 28 comprend, en outre, au moins une broche de communication 35 connectée au contrôleur 31 par un bus de communication 36.

Avantageusement, le bus d'alimentation 34 et le bus de communication 36 sont inclus séparément respectivement dans une première nappe de câbles plats flexibles, aussi dite nappe FFC, de l'anglais « Flexible Flat Cable », et dans une deuxième nappe FFC, la première nappe FFC étant distincte de la deuxième nappe FFC. Chaque nappe FFC est par exemple d'au moins 1cm de long, et les câbles inclus dans chaque nappe FFC ne sont pas blindés.

En variante, le bus d'alimentation 34 et le bus de communication 36 sont inclus dans une même nappe FFC. La nappe FFC est par exemple d'au moins 1cm de long, et les câbles inclus dans la nappe FFC ne sont pas blindés.

Un panneau solaire photovoltaïque 37, non représenté sur les figures, est configuré pour être connecté à l'actionneur électromécanique 11. Le panneau solaire photovoltaïque 37 est externe à l'actionneur électromécanique 11.

L'unité électronique de contrôle 15 comprend, en outre, des moyens de détection 39, autrement dit des éléments de détection 39, d'une connexion d'un panneau solaire photovoltaïque 37 au connecteur 28. Les moyens de détection 39 coopèrent, autrement dit sont configurés pour coopérer, avec le contrôleur 31, de telle sorte que le contrôleur 31 détecte, autrement dit est configuré pour détecter, une connexion du panneau solaire photovoltaïque 37 au connecteur 28. A titre d'exemple nullement limitatif, ces moyens de détection 39 peuvent comprendre un pont diviseur de tension auquel est appliqué en entrée une tension d'entrée fournie par l'unité électronique de contrôle 15 au travers du connecteur 28, l'unité électronique de contrôle 15 étant configurée pour mesurer une tension de sortie du pont diviseur de tension pour la comparer à une valeur tension cible, et en déduire la connexion du panneau solaire photovoltaïque 37 au connecteur 28. En variante, d'autres moyens de détection plus sophistiqués, et donc plus coûteux, peuvent être envisagés, mettant en œuvre par exemple une communication entre l'actionneur électromécanique 11 et le panneau solaire photovoltaïque 37 par l'intermédiaire du connecteur 28, le panneau solaire photovoltaïque 37 étant dans ce cas muni de moyens de communication adaptés pour communiquer avec l'unité électronique de contrôle 15 de l'actionneur électromécanique 11.

Un chargeur 44, non représenté sur les figures, est configuré pour être connecté à l'actionneur électromécanique 11. Le chargeur 44 est externe à l'actionneur électromécanique 11.

Avantageusement, le chargeur 44 est un chargeur intelligent connecté à une source d'alimentation en énergie électrique, par exemple au secteur, ou est une unité de puissance auxiliaire, par exemple une autre batterie externe à l'actionneur électromécanique 11 permettant de recharger des appareils électroniques sans utiliser de prise électrique, l'unité de puissance auxiliaire étant dans ce cas couramment appelée « Power Bank ».

Avantageusement, le chargeur intelligent 44 comprend des éléments matériels et logiciels adaptés pour communiquer avec le contrôleur 31 de l'actionneur électromécanique 11 par l'intermédiaire du bus de communication 36.

Selon un premier mode de réalisation de l'actionneur électromécanique 11, représenté à la figure 4, l'unité électronique de contrôle 15 comprend, en outre, un premier interrupteur 38, le premier interrupteur étant disposé sur le bus d'alimentation 34 entre la broche d'alimentation 33 du connecteur 28 et les moyens de connexion 19 à la batterie rechargeable 18. Autrement dit, le premier interrupteur 38 est connecté, d'une part, au connecteur 28 par l'intermédiaire du bus d'alimentation 34, et, d'autre part, aux moyens de connexion 19 à la batterie rechargeable 18.

Le premier interrupteur 38 est connecté en parallèle du circuit de charge 32.

A titre d'exemple nullement limitatif, le premier interrupteur 38 peut comporter un ou plusieurs N-MOSFET. Cependant d'autres exemples de réalisation peuvent être envisagés.

Le contrôleur 31 comprend une première sortie commandable OUT1 qui coopère, autrement dit est configurée pour coopérer, avec le premier interrupteur 38. Le premier interrupteur 38 est disposé sur le bus d'alimentation 34 de telle sorte que le premier interrupteur 38 autorise la circulation d'un courant sur le bus d'alimentation 34 entre la broche d'alimentation 33 du connecteur 28 et la batterie rechargeable 18 lorsque le premier interrupteur 38 est commandé dans un état fermé, et interrompt la circulation d'un courant sur le bus d'alimentation 34 entre la broche d'alimentation 33 du connecteur 28 et la batterie rechargeable 18 lorsque le deuxième interrupteur 42 est commandé dans un état ouvert.

Le premier interrupteur 38 est commandé dans un état fermé par la première sortie commandable OUT1 du contrôleur 31 lorsqu'une connexion d'un panneau solaire photovoltaïque 37 au connecteur 28 est détectée, de sorte à relier électriquement le bus d'alimentation 34 à la batterie rechargeable 18. De cette manière, le contrôleur 31 autorise la circulation d'un courant entre le panneau solaire photovoltaïque 37 et la batterie rechargeable 18 lorsqu'il détecte la connexion du panneau solaire photovoltaïque 37 au connecteur 28, permettant ainsi de diriger directement une majorité du courant produit par le panneau solaire photovoltaïque 37 vers la batterie rechargeable 18, tout en évitant de diriger cette majorité du courant vers le circuit de charge 32. En effet, le rendement du circuit de charge 32 serait mauvais s'il devait transformer le courant issu du panneau solaire photovoltaïque 37, ce courant étant en moyenne largement plus faible que celui d'un chargeur pour lequel le circuit de charge 32 est spécifiquement configuré. La consommation de l'actionneur électromécanique 11 est donc ainsi améliorée. En d'autres termes, l'unité électronique de contrôle 15 comporte des moyens 38 configurés pour court-circuiter, autrement dit, des moyens 38 court-circuitant le circuit de charge 32, lorsqu'une connexion d'un panneau solaire photovoltaïque 37 au connecteur 28 est détecté.

Avantageusement, la première sortie OUT1 relie électriquement le bus d'alimentation 34 aux moyens de connexion 19 à la batterie rechargeable 18 par l'intermédiaire d'une diode de telle sorte qu'un courant issu de la batterie rechargeable 18 soit bloqué vers le bus d'alimentation 34.

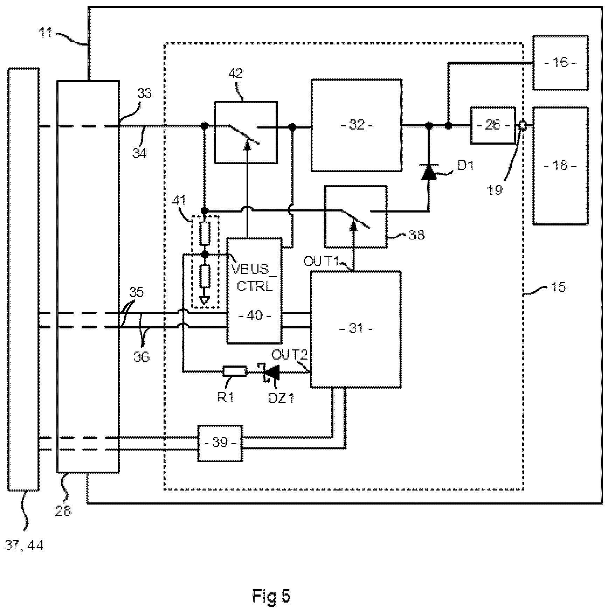

Selon un deuxième mode de réalisation avantageux de l'actionneur électromécanique 11, représenté à la **figure 5**, l'actionneur électromécanique 11 comprend, en outre, un circuit de protection 40, en particulier un circuit de protection contre des surtensions. Le circuit de protection 40 coopère, autrement dit est configuré pour coopérer, avec un deuxième interrupteur 42 externe au circuit de protection 40. Le deuxième interrupteur 42 est disposé sur le bus d'alimentation 34 de telle sorte que le deuxième interrupteur 42 autorise la circulation d'un courant sur le bus d'alimentation 34 entre la broche d'alimentation 33 du connecteur 28 et le circuit de charge 32 lorsque le deuxième interrupteur 42 est commandé dans un état fermé, et interrompt la circulation d'un courant sur le bus d'alimentation 34 entre la broche d'alimentation 33 du connecteur 28 et le circuit de charge 32 lorsque le deuxième interrupteur 42 est commandé dans un état ouvert.

Le premier interrupteur 38 est connecté en parallèle du deuxième interrupteur 42 et du circuit de charge 32.

Avantageusement, le circuit de protection 40 comprend une entrée de tension VBUS_CTRL reliée au bus d'alimentation 34 par l'intermédiaire d'un pont de résistances 41, en particulier configuré de manière à constituer un pont diviseur de tension. Le pont de résistances 41 est configuré pour adapter la tension du bus d'alimentation 34 à l'entrée de tension VBUS_CTRL, de telle sorte qu'une valeur nominale et/ou maximale de la tension du bus d'alimentation 34 puisse être détectée par le circuit de protection 40, et également qu'une surtension de la tension du bus d'alimentation 34 puisse être détectée par le circuit de protection 40. En particulier, le pont de résistances 41 est configuré pour diminuer la tension du bus d'alimentation 34 à l'entrée de tension VBUS_CTRL. A titre d'exemple nullement limitatif, la valeur nominale et/ou maximale de la tension du bus d'alimentation 34 détectée par le circuit de protection 40 par l'intermédiaire du pont de résistances 41 est strictement inférieure à 1,2 Volts, et une valeur de surtension de la tension du bus d'alimentation 34 détectée par le circuit de protection 40 par l'intermédiaire du pont de résistances 41 est supérieure ou égale à 1,2 Volts.

Avantageusement, le deuxième interrupteur 42 est commandé dans un état ouvert par le circuit de protection 40 lorsque le circuit de protection 40 détecte une surtension sur l'entrée de tension VBUS_CTRL. Ainsi configuré, le circuit de protection 40, en coopérant avec le deuxième interrupteur 42, permet de détecter une surtension sur le bus d'alimentation 34, et, en réaction, d'interrompre la circulation d'un courant sur le bus d'alimentation 34 entre la broche d'alimentation 33 du connecteur 28 et le circuit de charge 32 pour protéger le circuit de charge 32 de cette surtension.

Avantageusement, le contrôleur 31 comprend, en outre, une deuxième sortie commandable OUT2 qui coopère, autrement dit qui est configurée pour coopérer, avec l'entrée de tension VBUS_CTRL du circuit de protection 40. La deuxième sortie commandable OUT2 est reliée électriquement à l'entrée de tension VBUS_CTRL. Lorsqu'une connexion du panneau solaire photovoltaïque 37 au connecteur d'alimentation 28 est détectée, le contrôleur 31 commande, autrement dit est configuré pour commander, la deuxième sortie commandable OUT2, de sorte à simuler une surtension sur l'entrée de tension VBUS_CTRL, par exemple supérieure ou égale à 1,2 Volts. Cette configuration de l'unité électronique de contrôle 15 permet au contrôleur 31 de simuler une surtension sur l'entrée de tension VBUS_CTRL lorsqu'il détecte la connexion d'un panneau solaire photovoltaïque 37 au connecteur 28, provoquant automatiquement l'ouverture du deuxième interrupteur 42 par le circuit de protection 40, et ainsi interrompre la circulation d'un courant sur le bus d'alimentation 34 entre le connecteur 28 et le circuit de charge 32.

Par ailleurs, le premier interrupteur 38 est commandé dans un état fermé par la première sortie commandable OUT1 du contrôleur 31 lorsque la connexion du panneau solaire photovoltaïque 37 au connecteur 28 est détectée, de sorte à relier électriquement le bus d'alimentation 34 à la batterie rechargeable 18. Le contrôleur 31 autorise ainsi la circulation directe d'un courant entre le panneau solaire photovoltaïque 37 et la batterie rechargeable 18, permettant ainsi de diriger directement une majorité du courant produit par le panneau solaire photovoltaïque 37 vers la batterie rechargeable 18, tout en évitant de diriger cette majorité du courant vers le circuit de charge 32.

Par exemple le deuxième interrupteur 42 s'ouvre et ensuite le premier interrupteur 38 se ferme. Cet ordre n'est en aucun cas limitatif. En effet, dans un autre exemple, le premier interrupteur 38 se ferme et ensuite le deuxième interrupteur 42 s'ouvre, ou encore dans un autre exemple, l'ouverture du deuxième interrupteur 42 et la fermeture du premier interrupteur 38 sont simultanées.

De cette manière, le circuit de charge 32 ne consomme pas de courant lorsqu'un panneau solaire photovoltaïque 37 est connecté au connecteur 28, réduisant ainsi la consommation de l'actionneur électromécanique 11 lorsqu'un panneau solaire photovoltaïque 37 est connecté au connecteur 28.

Avantageusement, la deuxième sortie commandable OUT2 est reliée électriquement à l'entrée de tension VBUS_CTRL par l'intermédiaire d'une résistance et une diode Zener connectées ensemble en série. De cette manière, la diode Zener et la résistance coopèrent ensemble avec le pont de résistances 41 de telle sorte à ce que, lorsque la deuxième sortie commandable OUT2 est commandée, une valeur de tension correspondant à une surtension, par exemple de 1,2 Volts, est appliquée à l'entrée de tension du VBUS_CTRL du circuit de protection 40, simulant ainsi une surtension sur l'entrée de tension du VBUS_CTRL du circuit de protection 40, provoquant l'ouverture du deuxième interrupteur 42.

Selon le premier mode de réalisation et le deuxième mode de réalisation, le connecteur 28 est avantageusement un connecteur bus série universel, ou connecteur USB (de l'anglais « Universal Serial Bus ») de type C, aussi dit USB-C ou USB Type-C. Selon ce mode de réalisation, le connecteur USB Type-C comprend une broche d'alimentation VBUS, et deux broches de communication CC1, CC2 dédiées à la communication de signaux de type USB Power Delivery. Également selon ce mode de réalisation, le contrôleur 31 est un contrôleur USB Type-C qui contient une combinaison de composants logiciels, couramment appelée « pile » (traduit du terme anglo-saxon « stack ») USB Power Delivery, également appelée pile USB-PD.

Dans le cas du deuxième mode de réalisation, le circuit de protection 40 est un circuit de protection de port USB Type-C (traduit du terme anglosaxon « USB Type-C Port Protection ». Pour une mise en œuvre sûre et fiable de l'USB Type-C, le circuit de protection de port USB Type-C fournit une protection contre les surtensions sur les broches de communication CC1 et CC2 lorsque ces broches sont soumises à un court-circuit la broche d'alimentation VBUS, ce qui peut se produire lors du retrait d'un câble USB Type-C du connecteur 28. Le circuit de protection de port USB Type-C commande le deuxième interrupteur 42, par exemple de type N-MOSFET, lorsqu'une source d'alimentation défectueuse applique une tension supérieure à un seuil prédéterminé, ici une tension supérieure à 1,2 Volts.

Avantageusement, et en combinaison avec ce mode de réalisation de l'actionneur électromécanique 11, le chargeur intelligent 44 comprend des éléments matériels et logiciels compatibles avec, autrement dit configurés pour mettre en œuvre, la norme « USB Power Delivery » également appelée « USB-PD », en particulier la norme « USB Power Delivery 3.0 », également appelée « USB-PD 3.0 ».

## Revendications

1. Actionneur électromécanique (11) pour un dispositif d'occultation (3), l'actionneur électromécanique (11) comprenant au moins :
un moteur électrique (16),
une unité électronique de contrôle (15),
des moyens de connexion (19) à au moins une batterie rechargeable (18), et
un connecteur (28), le connecteur (28) étant configuré pour être connecté à un panneau solaire photovoltaïque (37) ou à un chargeur (44),
l'unité électronique de contrôle (15) comprenant au moins :
un circuit de charge (32), le circuit de charge (32) étant, d'une part, connecté aux moyens de connexion (19) à l'au moins une batterie rechargeable (18), et, d'autre part, relié électriquement au connecteur (28) par l'intermédiaire d'un bus d'alimentation (34),
un contrôleur (31), et
des moyens de détection (39) d'une connexion du panneau solaire photovoltaïque (37) au connecteur (28),
**caractérisé en ce que**
l'unité électronique de contrôle (15) comprend, en outre, au moins :
un premier interrupteur (38), le premier interrupteur (38) étant connecté, d'une part, au connecteur (28) par l'intermédiaire du bus d'alimentation (34), et, d'autre part, aux moyens de connexion (19) à l'au moins une batterie rechargeable (18),
et **en ce que**
le contrôleur (31) est configuré pour commander le premier interrupteur (38) dans un état fermé par une première sortie commandable (OUT1) du contrôleur (31) lorsqu'une connexion d'un panneau solaire photovoltaïque (37) au connecteur (28) est détectée, de sorte à relier électriquement le bus d'alimentation (34) aux moyens de connexion (19) à l'au moins une batterie rechargeable (18).

2. Actionneur électromécanique (11) selon la revendication 1, dans lequel le premier interrupteur (38) est connecté en parallèle du circuit de charge (32) de telle sorte à ce que le premier interrupteur (38) court-circuite le circuit de charge (32) lorsque le premier interrupteur (38) est commandé par la première sortie commandable (OUT1) du contrôleur (31).

3. Actionneur électromécanique (11) selon la revendication 1 ou selon la revendication 2, **caractérisé en ce que** la première sortie (OUT1) relie électriquement le bus d'alimentation (34) aux moyens de connexion (19) à l'au moins une batterie rechargeable (18) par l'intermédiaire d'une diode de telle sorte qu'un courant issu de la batterie rechargeable (18) soit bloqué vers le bus d'alimentation (34).

4. Actionneur électromécanique (11) selon l'une quelconque des revendications 1 à 3, **caractérisé en ce que** le connecteur (28) est un connecteur USB Type-C, **en ce que** le contrôleur (31) est un contrôleur USB Type-C, et **en ce que** le contrôleur USB Type-C est connecté à au moins une broche de communication (35) du connecteur bus série universel Type-C par l'intermédiaire d'un bus de communication (36).

5. Actionneur électromécanique (11) selon l'une quelconque des revendications 1 à 3, **caractérisé en ce que** l'unité électronique de contrôle (15) comprend, en outre, au moins :
un circuit de protection (40), le circuit de protection (40) étant connecté au connecteur (28) par l'intermédiaire d'un bus de communication (36), et comprenant une entrée de tension (VBUS_CTRL), l'entrée de tension (VBUS_CTRL) étant reliée au bus d'alimentation (34) par l'intermédiaire d'un pont de résistances (41), et
un deuxième interrupteur (42), le deuxième interrupteur (42) étant connecté, d'une part, au bus d'alimentation (34), et, d'autre part, au circuit de charge (32), le deuxième interrupteur (42) étant commandé dans un état ouvert par le circuit de protection (40) lorsque le circuit de protection (40) détecte une surtension sur l'entrée de tension (VBUS_CTRL),
**en ce que** le contrôleur (31) comprend, en outre, une deuxième sortie commandable (OUT2) reliée électriquement à l'entrée de tension (VBUS_CTRL),
et **en ce que**
le contrôleur (31) est configuré pour commander la deuxième sortie commandable (OUT2) lorsque la connexion du panneau solaire photovoltaïque (37) au connecteur (28) est détectée, de sorte à simuler une surtension sur l'entrée de tension (VBUS_CTRL).

6. Actionneur électromécanique (11) selon la revendication 5, **caractérisé en ce que** la deuxième sortie commandable (OUT2) est reliée à l'entrée de tension (VBUS_CTRL) par l'intermédiaire d'une résistance et d'une diode Zener connectées ensemble en série.

7. Actionneur électromécanique (11) selon la revendication 5 ou selon la revendication 6, **caractérisé en ce que** le connecteur (28) est un connecteur USB Type-C, **en ce que** le contrôleur (31) est un contrôleur USB Type-C, et **en ce que** le circuit de protection (40) est un circuit de protection de port USB Type-C.

8. Dispositif d'occultation (3) comprenant au moins un tube d'enroulement (4), un écran (2) enroulable sur le tube d'enroulement (4), un actionneur électromécanique (11) configuré selon l'une quelconque des revendications 1 à 7, l'actionneur électromécanique (11) étant, en outre, configuré pour entraîner en rotation le tube d'enroulement (4), l'actionneur électromécanique (11) comprenant, en outre, un support de couple (21), le support de couple (21) comprenant le connecteur (28).

9. Procédé de charge d'au moins une batterie rechargeable (18) configurée pour alimenter un actionneur électromécanique (11) pour un dispositif d'occultation (3), l'actionneur électromécanique (11) étant configuré selon l'une quelconque des revendications 1 à 4, le procédé étant mis en œuvre par l'unité électronique de contrôle (15), et comprenant au moins :
une étape de détection d'une connexion du panneau solaire photovoltaïque (37) au connecteur (28),
lorsqu'une la connexion du panneau solaire photovoltaïque (37) au connecteur (28) est détectée, une étape de commande du premier interrupteur (38) dans un état fermé, de sorte à relier électriquement le bus d'alimentation (34) aux moyens de connexion (19) à l'au moins une batterie rechargeable (18).

10. Procédé de charge d'au moins une batterie rechargeable (18) configurée pour alimenter un actionneur électromécanique (11) pour un dispositif d'occultation (3), l'actionneur électromécanique (11) étant configuré selon l'une quelconque des revendications 5 à 7, le procédé étant mis en œuvre par l'unité électronique de contrôle (15), et comprenant au moins :
une étape de détection d'une connexion du panneau solaire photovoltaïque (37) au connecteur (28),
lorsqu'une la connexion du panneau solaire photovoltaïque (37) au connecteur (28) est détectée, une première étape de commande du premier interrupteur (38) dans un état fermé, de sorte à relier électriquement le bus d'alimentation (34) aux moyens de connexion (19) à l'au moins une batterie rechargeable (18), et
lorsqu'une la connexion du panneau solaire photovoltaïque (37) au connecteur (28) est détectée, une étape de commande de la deuxième sortie commandable (OUT2) de sorte à simuler une surtension sur l'entrée de tension (VBUS_CTRL) provoquant le passage à l'état ouvert du deuxième interrupteur (42).

## Patentansprüche

1. Elektromechanischer Aktuator (11) für eine Abschirmvorrichtung (3), wobei der elektromechanische Aktuator (11) mindestens umfasst:
einen Elektromotor (16),
eine elektronische Steuereinheit (15),
Verbindungsmittel (19) zu mindestens einer wiederaufladbaren Batterie (18), und
einen Verbinder (28), wobei der Verbinder (28) dafür konfiguriert ist, mit einem photovoltaischen Solarpanel (37) oder mit einem Ladegerät (44) verbunden zu werden,
wobei die elektronische Steuereinheit (15) mindestens umfasst:
eine Ladeschaltung (32), wobei die Ladeschaltung (32) einerseits mit den Verbindungsmitteln (19) zu der mindestens einen wiederaufladbaren Batterie (18) verbunden ist und andererseits elektrisch mit dem Verbinder (28) über einen Versorgungsbus (34) verbunden ist,
einen Controller (31), und
Erfassungsmittel (39) zum Erkennen einer Verbindung des photovoltaischen Solarpanels (37) mit dem Verbinder (28),
**dadurch gekennzeichnet, dass**
die elektronische Steuereinheit (15) ferner mindestens umfasst:
einen ersten Schalter (38), wobei der erste Schalter (38) einerseits mit dem Verbinder (28) über den Versorgungsbus (34) verbunden ist und andererseits mit den Verbindungsmitteln (19) zu der mindestens einen wiederaufladbaren Batterie (18),
und dadurch, dass
der Controller (31) dafür konfiguriert ist, den ersten Schalter (38) durch einen ersten steuerbaren Ausgang (OUT1) des Controllers (31) in einen geschlossenen Zustand zu schalten, wenn eine Verbindung eines photovoltaischen Solarpanels (37) mit dem Verbinder (28) erkannt wird, so dass der Versorgungsbus (34) elektrisch mit den Verbindungsmitteln (19) zu der mindestens einen wiederaufladbaren Batterie (18) verbunden wird.

2. Elektromechanischer Aktuator (11) nach Anspruch 1, wobei der erste Schalter (38) parallel zu der Ladeschaltung (32) geschaltet ist, so dass der erste Schalter (38) die Ladeschaltung (32) kurzschließt, wenn der erste Schalter (38) durch den ersten steuerbaren Ausgang (OUT1) des Controllers (31) angesteuert wird.

3. Elektromechanischer Aktuator (11) nach Anspruch 1 oder nach Anspruch 2, **dadurch gekennzeichnet, dass** der erste Ausgang (OUT1) den Versorgungsbus (34) elektrisch mit den Verbindungsmitteln (19) zu der mindestens einen wiederaufladbaren Batterie (18) über eine Diode verbindet, so dass ein Strom aus der wiederaufladbaren Batterie (18) zu dem Versorgungsbus (34) gesperrt wird.

4. Elektromechanischer Aktuator (11) nach einem der Ansprüche 1 bis 3, **dadurch gekennzeichnet, dass** der Verbinder (28) ein USB-Typ-C-Verbinder ist, dass der Controller (31) ein USB-Typ-C-Controller ist und dass der USB-Typ-C-Controller mit mindestens einem Kommunikationspin (35) des Universal Serial Bus-Typ-C-Verbinders über einen Kommunikationsbus (36) verbunden ist.

5. Elektromechanischer Aktuator (11) nach einem der Ansprüche 1 bis 3, **dadurch gekennzeichnet, dass** die elektronische Steuereinheit (15) ferner mindestens umfasst:
eine Schutzschaltung (40), wobei die Schutzschaltung (40) mit dem Verbinder (28) über einen Kommunikationsbus (36) verbunden ist und einen Spannungseingang (VBUS_CTRL) umfasst, wobei der Spannungseingang (VBUS_CTRL) über eine Widerstandsbrücke (41) mit dem Versorgungsbus (34) verbunden ist, und
einen zweiten Schalter (42), wobei der zweite Schalter (42) einerseits mit dem Versorgungsbus (34) und andererseits mit der Ladeschaltung (32) verbunden ist, wobei der zweite Schalter (42) durch die Schutzschaltung (40) in einen offenen Zustand geschaltet wird, wenn die Schutzschaltung (40) eine Überspannung an dem Spannungseingang (VBUS_CTRL) erkennt,
dadurch, dass der Controller (31) ferner einen zweiten steuerbaren Ausgang (OUT2) umfasst, der elektrisch mit dem Spannungseingang (VBUS_CTRL) verbunden ist,
und dadurch, dass
der Controller (31) dafür konfiguriert ist, den zweiten steuerbaren Ausgang (OUT2) anzusteuern, wenn die Verbindung des photovoltaischen Solarpanels (37) mit dem Verbinder (28) erkannt wird, so dass eine Überspannung an dem Spannungseingang (VBUS_CTRL) simuliert wird.

6. Elektromechanischer Aktuator (11) nach Anspruch 5, **dadurch gekennzeichnet, dass** der zweite steuerbare Ausgang (OUT2) über einen Widerstand und eine Zenerdiode, die gemeinsam in Reihe geschaltet sind, mit dem Spannungseingang (VBUS_CTRL) verbunden ist.

7. Elektromechanischer Aktuator (11) nach Anspruch 5 oder nach Anspruch 6, **dadurch gekennzeichnet, dass** der Verbinder (28) ein USB-Typ-C-Verbinder ist, dass der Controller (31) ein USB-Typ-C-Controller ist und dass die Schutzschaltung (40) eine USB-Typ-C-Port-Schutzschaltung ist.

8. Abschirmvorrichtung (3), umfassend mindestens eine Wickelwelle (4), eine auf die Wickelwelle (4) aufwickelbare Abschirmung (2), einen elektromechanischen Aktuator (11), der nach einem der Ansprüche 1 bis 7 konfiguriert ist, wobei der elektromechanische Aktuator (11) ferner dafür konfiguriert ist, die Wickelwelle (4) rotatorisch anzutreiben, wobei der elektromechanische Aktuator (11) ferner einen Drehmomentträger (21) umfasst, wobei der Drehmomentträger (21) den Verbinder (28) umfasst.

9. Ladeverfahren für mindestens eine wiederaufladbare Batterie (18), die dazu konfiguriert ist, einen elektromechanischen Aktuator (11) für eine Abschirmvorrichtung (3) zu versorgen, wobei der elektromechanische Aktuator (11) nach einem der Ansprüche 1 bis 4 konfiguriert ist, wobei das Verfahren von der elektronischen Steuereinheit (15) durchgeführt wird und mindestens umfasst:
einen Schritt des Erkennens einer Verbindung des photovoltaischen Solarpanels (37) mit dem Verbinder (28),
wenn die Verbindung des photovoltaischen Solarpanels (37) mit dem Verbinder (28) erkannt wird, einen Schritt des Ansteuerns des ersten Schalters (38) in einen geschlossenen Zustand, so dass der Versorgungsbus (34) elektrisch mit den Verbindungsmitteln (19) zu der mindestens einen wiederaufladbaren Batterie (18) verbunden wird.

10. Ladeverfahren für mindestens eine wiederaufladbare Batterie (18), die dazu konfiguriert ist, einen elektromechanischen Aktuator (11) für eine Abschirmvorrichtung (3) zu versorgen, wobei der elektromechanische Aktuator (11) nach einem der Ansprüche 5 bis 7 konfiguriert ist, wobei das Verfahren durch die elektronische Steuereinheit (15) durchgeführt wird und mindestens umfasst:
einen Schritt des Erkennens einer Verbindung des photovoltaischen Solarpanels (37) mit dem Verbinder (28),
wenn die Verbindung des photovoltaischen Solarpanels (37) mit dem Verbinder (28) erkannt wird, einen ersten Schritt des Ansteuerns des ersten Schalters (38) in einen geschlossenen Zustand, so dass der Versorgungsbus (34) elektrisch mit den Verbindungsmitteln (19) zu der mindestens einen wiederaufladbaren Batterie (18) verbunden wird, und
wenn die Verbindung des photovoltaischen Solarpanels (37) mit dem Verbinder (28) erkannt wird, einen Schritt des Ansteuerns des zweiten steuerbaren Ausgangs (OUT2), so dass eine Überspannung an dem Spannungseingang (VBUS_CTRL) simuliert wird, wodurch der Wechsel des zweiten Schalter (42) in den offenen Zustand bewirkt wird.

## Claims

1. An electromechanical actuator (11) for a privacy device (3), the electromechanical actuator (11) comprising at least:
an electric motor (16),
an electronic control unit (15),
connection means (19) to at least one rechargeable battery (18), and
a connector (28), the connector (28) being configured to be connected to a photovoltaic solar panel (37) or to a charger (44),
the electronic control unit (15) comprising at least:
a charging circuit (32), the charging circuit (32) being, on the one hand, connected to the connection means (19) to the at least one rechargeable battery (18), and, on the other hand, electrically connected to the connector (28) via a power supply bus (34),
a controller (31), and
means (39) for detecting a connection of the photovoltaic solar panel (37) to the connector (28),
**characterized in that**
the electronic control unit (15) further comprises at least:
a first switch (38), the first switch (38) being connected, on the one hand, to the connector (28) via the power supply bus, and, on the other hand, to the connection means (19) to the at least one rechargeable battery (18),
and **in that**
the controller (31) is configured to control the first switch (38) in a closed state by means of a first controllable output (OUT1) of the controller (31) when a connection of a photovoltaic solar panel (37) to the connector (28) is detected, so as to electrically connect the power supply bus (34) to the connection measn (19) to the least one rechargeable battery (18).

2. The electromechanical actuator (11) according to claim 1, **characterized in that** the first switch (38) is connected in parallel with the charging circuit (32) such that the first switch (38) short-circuits the charging circuit (32) when the first switch (38) is controlled by the first controllable output (OUT1) of the controller (31).

3. The electromechanical actuator (11) according to claim 1 or claim 2, **characterized in that** the first output (OUT1) electrically connects the power supply bus (34) to the connection means (19) to the at least one rechargeable battery (18) via a diode such that a current from the rechargeable battery (18) is blocked toward the power supply bus (34).

4. The electromechanical actuator (11) according to one of the claims 1 to 3, **characterized in that** the connector is a USB Type-C connector (28), the controller (31) is a USB Type-C controller, and the USB Type-C controller is connected to at least one communication pin (35) of the Universal Serial Bus Type-C connector via a communication bus (36).

5. The electromechanical actuator (11) according to one of the claims 1 to 3, **characterized in that** the electronic control unit (15) further comprises at least:
a protection circuit (40), the protection circuit (40) being connected to the connector (28) via a communication bus (36), and comprising a voltage input (VBUS_CTRL), the voltage input (VBUS_CTRL) being connected to the power supply bus (34) via a resistor bridge (41), and
a second switch (42), the second switch (42) being connected, on the one hand, to the power supply bus (34), and, on the other hand, to the charging circuit (32), the second switch (42) being controlled in an open state by a protection circuit when the protection circuit (40) detects an overvoltage at the voltage input (VBUS_CTRL), and
**in that** the controller (31) further comprises a second controllable output (OUT2) electrically connected to the voltage input (VBUS_CTRL), and **in that**
the controller is configured to control the second controllable output when the connection of the photovoltaic solar panel to the connector is detected, so as to simulate an overvoltage at the voltage input.

6. The electromechanical actuator (11) according to claim 5, **characterized in that** the second controllable output (OUT2) is connected to the voltage input (VBUS_CTRL) via a resistor and a Zener diode which are connected together in series.

7. The electromechanical actuator according to claim 5 or claim 6, **characterized in that** the connector (28) is a USB Type-C connector and **in that** the controller (31) is a USB Type-C controller, and **in that** the protection circuit (40) is a USB Type-C port protection circuit.

8. A sun protection or privacy device comprising at least one roller tube (4), a screen (2) which can be rolled around the roller tube, an electromechanical actuator (11) configured according to one of the claims 1 to 7, the electromechanical actuator being further configured to rotate the roller tube, the electromechanical actuator (11) further comprising a torque support (21), the torque support (21) comprising the connector (28).

9. A method of charging at least one rechargeable battery (18) configured to supply power to an electromechanical actuator (11) for a sun protection or a privacy device (3), the electromechanical actuator (11) being configured according to one of the claims 1 to 4, the method being implemented by the electronic control unit (15) and comprising at least:
a step of detecting a connection of the photovoltaic solar panel (37) to the connector (28),
when a connection of the photovoltaic solar panel (37) to the connector (28) is detected, a step of controlling the first switch (38) in a closed state so as to electrically connect the power supply bus(34) to the connection means (19) to the at least one rechargeable battery (18).

10. A method of charging at least one rechargeable battery (18) configured to supply power to an electromechanical actuator (11) for a sun protection or a privacy device, the electromechanical actuator (11) being configured according to one of the claims 5 to 7, the method being implemented by the electronic control unit (15) and comprising at least:
- a step of detecting a connection of the photovoltaic solar panel (37) to the connector (28),
- when a connection of the photovoltaic solar panel (37) to the connector (28) is detected, a first step of controlling the first switch (38) in a closed state, so as to electrically connect the power supply bus (34) to the connection means (19) to the at least one rechargeable battery (18), and
- when a connection of the photovoltaic solar panel (37) to the connector (28) is detected, a step of controlling the second controllable output (OUT2) so as to simulate an overvoltage at the voltage input (VBUS_CTRL) making the second switch to switch to the open state (42).
